# EUROPEAN PATENT SPECIFICATION

(11) **EP 2 715 132 B1**
(45) Date of publication and mention of the grant of the patent: **16.09.2015**
(21) Application number: 12795085.5
(22) Date of filing: 10.08.2012
(51) Int. Cl.: F04B 1/053, F04B 17/02

(54) **CYLINDER BLOCK FOR HYDRAULIC PUMP IN RENEWABLE POWER GENERATING APPARATUS**
ZYLINDERBLOCK FÜR HYDRAULIKPUMPE BEI EINER VORRICHTUNG ZUR ERZEUGUNG ERNEUERBARER ENERGIEN
BLOC-CYLINDRES POUR POMPE HYDRAULIQUE DANS UN APPAREIL DE GÉNÉRATION D'ÉNERGIE RENOUVELABLE

(43) Date of publication of application: 09.04.2014
(73) Proprietor: Mitsubishi Heavy Industries, Ltd., Tokyo 108-8215 (JP)
(72) Inventor: EILERS, Jens, Lothian, EH209TB (GB); DODSON, Henry, Lothian, EH209TB (GB)
(74) Representative: Hindle, Alistair Andrew
(86) International application number: PCT/JP2012/005105
(87) International publication number: WO 2014/024231

(56) References cited:
- EP-A2- 2 151 574
- WO-A2-2011/104544
- GB-A- 2 046 353
- US-A1- 2012 061 969

## Description

### Technical Field

The disclosure relates to the field of hydraulic radial piston pumps for use in power generating apparatus of a renewable energy type, such as wind turbines. The disclosure relates in particular to the configuration of cylinder blocks for use in such pumps.

### Background Art

In power generating apparatus of a renewable energy type, such as a wind turbine generator or a tidal turbine generator, it is known to employ a hydraulic pump driven by a rotor which is in turn driven by a renewable energy source (e.g. wind or flowing water respectively). Hydraulic fluid from the hydraulic pump drives a hydraulic motor which is coupled to an electricity generator.

Maintenance of radial piston pumps in such apparatus is difficult because the pumps are massive and typically located at places which are difficult to reach, for example in the nacelle of a wind turbine generator tower. In order to facilitate maintenance of radial piston pumps in such machines it has been proposed in WO 2011/104544 (Salter et al.) to form groups of cylinders into a cylinder block, typically comprising drilled metal or a metal casting, which defines a plurality of cylinders. In the machine of WO 2011/104544 high pressure fluid is supplied to cylinders through passages which extend circumferentially through each cylinder block, near the radially outermost surface, and radially inwards where they form a seal with a shoulder of a support.

However, the pumps employed in such devices are massive and the forces acting on the cylinder blocks are very large. These forces including bending and torsional forces arising from the pump being secured to a support at one side, meaning that some of the mass of the pump is supported by forces within the cylinder blocks, and also from the radially outwards forces exerted by pistons on the cylinder blocks during operation of the device.

At least one embodiment of the present invention therefore addresses the technical problem of providing cylinder blocks through which high and low pressure fluid can be supplied to and from the cylinders, which are strong and resistant to bending and torsional forces.

### Summary of Invention

According to a first aspect of the invention there is provided a power generating apparatus of a renewable energy type which generates power from a renewable energy source, the power generating apparatus comprising:
a nacelle; a hub on which at least one rotor blade is mounted, the at least one rotor blade receiving energy from the renewable energy source, causing it to rotate; a rotating shaft which is coupled to the hub; a pump which is coupled to the rotating shaft and which is driven by rotation of the rotating shaft; at least one motor which is driven by pressurized hydraulic fluid from the pump; at least one generator which is coupled to the at least one motor;
the pump comprising:
   a static part which is coupled to the nacelle by a support, and a rotating part, which is coupled to the rotating shaft and rotatable around an axis;
   one or more cylinder blocks which together extend around the axis;
   a low pressure fluid manifold extending around the one or more cylinder blocks;
   a high pressure fluid manifold;
   wherein the one or more cylinder blocks comprises a plurality of cylinders which are circumferentially distributed around the axis, one or more high pressure fluid passages through which the cylinders communicate with the high pressure fluid manifold through at least one high pressure valve and a plurality of low pressure fluid passages through which the cylinders communicate with the low pressure manifold through at least one low pressure valve,
   wherein the said low pressure fluid passages extend radially outwards from respective cylinders to the radially outwards surface of the respective cylinder block and wherein the one or more high pressure fluid passages through which a pair of circumferentially adjacent cylinders communicate with the high pressure manifold have an axially extending region which extends axially towards an end surface of the respective cylinder block at a circumferential angle which is between the circumferential angle of the pair of circumferentially adjacent cylinders.

By the circumferential angle of an object (e.g. a passage or cylinder) we refer to the angle between a plane extending through the axis and the object and an (arbitrary) reference plane extending through the axis. By circumferentially adjacent cylinders we refer to two or more cylinders which are next to each other around the axis. If there is one cylinder block, it extends around the axis. If there is more than one cylinder blocks, they together extend around the axis. The one or more cylinder blocks may be part of the static part of the pump or part of the rotating part of the pump.

Because the low-pressure fluid passages extend radially outwards from the cylinders to the radially outwards surface of the cylinder block, there is a short flow path between the cylinders and the low-pressure manifold, minimising resistance to fluid flow and improving the efficiency of the machine. Typically, the low-pressure fluid passages extend directly radially outwards from the cylinders. Typically, the low pressure manifold comprises a cavity located radially outwards of the one or more cylinder blocks.

The axially extending regions of the high pressure fluid passages extend towards the end surface of the cylinder block and typically reach within 20% or within 10% of the axial thickness of the cylinder block of the end surface of the cylinder block but the high pressure fluid passages need not extend to the end surface of the cylinder block. They might comprise radially extending passages and high pressure ports in a radially inwards facing surface. This has minimal effect on the strength of the cylinder block.

For example, it may be that the one or more cylinder blocks have radially inwards surfaces and one or more high pressure fluid ports on the radial inwards surfaces through which the cylinders communicate with the high pressure manifold through the said axially extending regions of the high pressure fluid passages and connecting regions of the high pressure fluid passages which extend from axial ends of one or more said axially extending regions of the high pressure fluid passages to one or more said high pressure fluid ports.

It may be that the connecting regions of the high pressure fluid passages extend radially from one or more axially extending regions of the high pressure fluid passages to one or more said high pressure fluid ports on the radially inwards surface of the respective cylinder block.

It may be that the the axially extending regions of the high pressure fluid passages extend to an axial end which is closer to the end plate of the cylinder block than the part of the pair of circumferentially adjacent cylinders which is closest to the end plate of the cylinder block.

Because the axially extending region(s) of the one or more high pressure fluid passage through which the pair of circumferentially adjacent cylinders communicate with the high pressure manifold extends axially towards an end surface of the cylinder block at a circumferential angle which is between the circumferential angle of the pair of circumferentially adjacent cylinders, the mechanical strength of the cylinder block and in particular its resilience to deformation by bending and torsion, is significantly better than if the high pressure fluid passages only extend circumferentially, or have axially extending regions only on the same side of each adjacent cylinder (in which case there would be axially extending regions of the high pressure fluid passages between each pair of circumferentially adjacent cylinders). Furthermore, one or more high pressure valves can be located at a circumferential angle which is between the circumferential angle of the circumferentially adjacent cylinders, reducing the void volume of the cylinder block and thereby increasing strength and resistance to bending and torsion.

By the void volume of the cylinder block we refer to the volume which is not part of the material from which the body of the cylinder block is made, typically metal. Void volume may result from drilling, or from the space occupied by a cast during casting. Some of the void volume may be occupied by introduced components, such as the high pressure valves or cassettes described below.

By improving the strength of the cylinder block and reducing the stress concentration in use, the cylinder block might, for example, have a greater axial extent (and therefore incorporate additional cylinders) while retaining structural integrity. It may also be possible to make the cylinder block smaller for a given power output of machine, reducing costs and increasing efficiency.

Therefore, preferably for at least one (and typically both) of the pair of circumferentially adjacent cylinders, there is a further circumferentially adjacent cylinder (that is to say, one of the pair of circumferentially adjacent cylinders is between the other of the pair of circumferentially adjacent cylinders and the further circumferentially adjacent cylinder), and there is no axially extending region of a high pressure fluid passage extending axially towards the end surface of the cylinder block at a circumferential angle between the pair of cylinders and the further cylinder.

Typically, there is no high pressure fluid passage region (whether axially extending or otherwise) at a circumferential angle between the pair of cylinders and the further cylinder.

By between the two circumferentially adjacent cylinders we mean that the circumferential angle of one or more axially extending regions of the high pressure fluid passages is between the circumferential angle of the two circumferentially adjacent cylinders. The one or more high pressure fluid passages might have axially extending regions at a position which is radially inwards or radially outwards of the two circumferentially adjacent cylinders although preferably the radial position (i.e. distance from the axis) of the high pressure fluid passages is between the radial position of the ends of the circumferentially adjacent cylinders.

The plurality of cylinders may be arranged in the form of a plurality of circumferentially spaced rows of cylinders, each row of cylinders comprising a plurality of axially spaced cylinders, wherein the pair of cylinders are in a pair of rows of cylinders and the cylinders in both of the pair of rows communicate with the high pressure fluid manifold through axially extending portions of one or more high pressure fluid passages, which axially extending portions extend at a circumferential angle between cylinders in both of the pair of rows of cylinders. The cylinders in both of the pair of rows may each communicate with the high pressure fluid manifold through a common axially extending portion of a high pressure fluid passage.

Typically, there is a common axially extending region of a high pressure fluid passage through which each cylinder in a row of cylinders communicates with the high pressure manifold.

Typically, for at least one (and typically both) of the pair of circumferentially adjacent cylinders, there is a further circumferentially adjacent cylinder, (that is to say, the one of the pair of circumferentially adjacent cylinder is between both the other of the pair of circumferentially adjacent cylinders and the further circumferentially adjacent cylinder) which is in a further row of cylinders, and there is no axially extending region of a high pressure fluid passage extending axially towards the end surface of the cylinder block at a circumferential angle between the pair of cylinders and the further cylinder.

Therefore, the cylinder block need not be weakened by an axially extending passage region between each pair of circumferentially adjacent rows of cylinders. It may be that axially extending regions of the high pressure fluid passages extend axially between alternate rows of circumferentially spaced cylinders around the axis.

It may be that the pair of circumferentially adjacent cylinders communicate with the high pressure manifold through a single said axially extending region of a high pressure fluid passage which extends axially towards an end surface of the respective cylinder block at a circumferential angle which is between the circumferential angle of the pair of circumferentially adjacent cylinders. Each said axially extending region of a high pressure fluid passage may communicate high pressure fluid between a single high pressure port (on a surface of the respective cylinder block) and the pair of circumferentially adjacent cylinders.

Thus, it may be that a single high pressure port and axially extending region of a high pressure fluid passage is used to communicate high pressure fluid to or from the pair of circumferentially adjacent cylinders. This can have the advantage of requiring only a single high pressure port in a face of the cylinder block.

However, it may be that the pair of circumferentially adjacent cylinders each communicate with an axially extending region of different high pressure fluid passages which axially extending regions extend axially towards an end surface of the respective cylinder block at a circumferential angle which is between the circumferential angle of the pair of circumferentially adjacent cylinders. The pair of circumferentially adjacent cylinders may each communicate with a different high pressure port in a face of the cylinder block through a different one or more of the said axially extending regions of high pressure fluid passages.

It can in some embodiments be preferable to have axially extending regions of a plurality of high pressure fluid passages between the pair of circumferentially adjacent cylinders, rather than one shared axially extending region of a high pressure fluid passage to improve mechanical strength and resistance to bending and torsion of the cylinder block.

It may be that the support which couples the pump to the nacelle resists receives torque applied to the pump by the rotating shaft while allowing some displacement (typically whatever amount is required) of the pump in a direction perpendicular to the axis of the rotating shaft.

It has been found to be advantageous to allow some movement of the pump in a direction perpendicular to the axis of the rotating shaft. This additional degree of freedom reduces bending and torsional forces.

The pump may comprise a first end plate and a second end plate, wherein the one or more cylinder blocks extend between the first end plate and the second end plate. The support may be coupled directly to the first end plate. Typically, the support is not coupled directly to the second end plate. A plurality of axial bolts are typically provided to couple the first and second end plates through respective axial bores in the cylinder blocks to counter torsion of the one or more cylinder blocks.

Typically, the one or more cylinder blocks are attached to the first and second end plates (typically by said plurality of axial bolts). Typically, the one or more cylinder blocks resist radially outwards forces exerted in use by pistons which are slidably mounted in the cylinders.

The high pressure fluid manifold may extend through the first end plate. The high pressure fluid manifold may extend through the second end plate. The high pressure fluid manifold may extend around the axis.

It may be that the one or more cylinder blocks have a neutral axis at which the stress and strain due to bending are zero and wherein the axially extending regions of the high pressure fluid passages and/or the high pressure valves are close to or intersect the neutral axis (for example, within +/- 10% or +/-5% of the radial thickness of the cylinder block, of the neutral axis). It may be that the high pressure valves are parallel to and/or intersect the neutral axis.

A neutral axis is an axis in the cross section of a beam or shaft along which there is no stress or strain. The cylinder block can be seen as such a beam or shaft extending in a radial direction, albeit if the cylinder block is curved or angled in order to extend circumferentially, the neutral axis will be correspondingly curved or angled. By locating the axially extending regions of the high pressure fluid passages close to the neutral axis, their deleterious effect of the volume occupied by the high pressure fluid passages on the strength of the cylinder block will be reduced.

The cylinder block may comprise at least one said high pressure valve, located radially outwards of the two circumferentially adjacent cylinders and located at a circumferential angle between the circumferential angle of the low pressure passages associated with each of the circumferentially adjacent cylinders.

The said high pressure valve regulates the flow of hydraulic fluid between the high pressure manifold and at least one of the circumferentially adjacent cylinders.

This is a compact arrangement, minimising void volume in the cylinder block, maintaining the strength of the cylinder block.

It may be that the or each cylinder block comprises a cassette containing at least one high pressure valve, which regulates the flow of high pressure fluid between each of the two circumferentially adjacent cylinders and the high pressure manifold (typically by regulating the flow of fluid between the cylinders and the high pressure fluid passages), and wherein the cassette is located radially outwards of the circumferentially adjacent cylinders and at a circumferential angle intermediate the low pressure passages associated with each of the circumferentially adjacent cylinders.

Thus, the shortest distance between the high pressure valves and the radially outer surface of the cylinder block is typically less than a shortest distance between the cylinders and said radially outer surface of the cylinder block.

It may be that each cassette comprises two high pressure valves, each for regulating the flow of high pressure fluid from a respective one of the circumferentially adjacent cylinders to one or more of the one or more high pressure fluid passages, each high pressure valve being a check valve. It may be that each cassette comprises two valve seats and one valve housing thereby forming two high pressure check valves. The two high pressure check valves may actuate in opposite directions. The cassette may be retained between two annular sealing surfaces having the same diameter.

Typically each cassette is located in a cooperating circumferentially aligned passage which extends to a circumferential edge of the cylinder block.

The valve members may be spherical balls. The valve members may be formed of steel. The valve members may be formed of silicon nitride.

It may be that the plurality of cylinders comprises at least one bank of cylinders which extends around the axis and where the cylinders in the at least one bank are operated with different phases during rotation of the rotating shaft. This reduces ripple in the torque output by the pump.

Typically, the cylinders are distributed in a plurality of axially spaced banks.

The power generating apparatus of a renewable energy type may be a wind turbine generator. In this case, the renewable energy source is wind. The power generating apparatus of a renewable energy type may be a turbine generator for extracting energy from a flowing liquid, e.g. a tidal turbine. In that case, the renewable energy source is flowing water.

Although the pump is typically a dedicated pump, it may be a pump-motor which is operable as a pump or a motor in alternative operating modes.

Typically, the pump has a mass of at least 10,000 kg or at least 50,000 kg. Typically each cylinder block has a mass of at least 100kg or at least 500kg.

Within this description and the appended claims, the terms "high pressure manifold" and "low pressure manifold" refer to manifolds with higher and lower pressures relative to each other. The pressure difference between the high and low pressure manifolds, and the absolute values of the pressure in the high and low pressure manifolds will depend on the application. A fluid working machine may have more than one low pressure manifold and may have more than one high pressure manifold.

The one or more cylinder blocks are typically individually demountable. The one or more cylinder blocks may be individually demountable in a radially outwards direction. This facilitates maintenance and repair.

The disclosure extends in a second aspect to a method of manufacturing a cylinder block suitable for use as the cylinder block of the power generating apparatus of the first aspect of the disclosure wherein stresses and strains in the cylinder block are simulated and the design of the cylinder block is selected so that the cylinder block has a neutral axis and the high pressure valves are located such that they are parallel to and/or intersect the neutral axis, wherein the design of the cylinder block is then finalised and cylinder blocks are manufactured according to the design.

Other features of the cylinder block manufactured according to the second aspect of the disclosure correspond to the features of the cylinder block are discussed above in relation to the first aspect of the disclosure. In particular, the method preferably comprises providing the axially extending regions of high pressure fluid passages and/ or high pressure valves close to, for example, within +/-10% of the radial thickness of the cylinder block of the neutral axis, or within +/-5% of the radial thickness of the cylinder block of the neutral axis, or intersecting the neutral axis.

The design of the cylinder block may be selected taking into account packaging constraints of the high pressure valves, the need to maintain a separation between high pressure fluid lines and low pressure fluid lines and a need to maintain a minimum border of cylinder block material to avoid pressure blow-though. For example, the high pressure valves (whether individually or as part of a cassette comprising two high pressure valves) may be received in circumferentially extending passages having a valve (or cassette) retaining region which retains the or each high pressure valve (or the cassette) and a cap securing region which receives a cap in use, to seal the or each valve (or the cassette) within the circumferentially extending passages. The internal diameter of the valve (or cassette) retaining region is typically less than the internal diameter of the cap retaining region, to facilitate insertion of the or each high pressure valve (or the cassette) without damage to seals and sealing surfaces.

### Brief Description of Drawings

An example embodiment of the present invention will now be illustrated with reference to the following Figures in which:
[fig.1]Figure 1 is a cut away isometric view of a wind turbine generator nacelle;
[fig.2]Figure 2 is a schematic diagram of relevant fluid connections within the wind turbine generator nacelle;
[fig.3]Figure 3 is an isometric view of a hydraulic pump according to an embodiment of the invention, with cover removed;
[fig.4]Figure 4 is an isometric view of internal components of a cylinder block according to an embodiment of the invention;
[fig.5]Figure 5 is a plan view in a radially inwards direction of the cylinder block of Figure 4;
[fig.6]Figure 6 is a cross-section, perpendicular to the axis of rotation of the pump rotor, through the cylinder block;
[fig.7]Figure 7 is a cross-section, perpendicular to the axis of rotation of the pump rotor, through two circumferentially adjacent cylinder blocks;
[fig.8]Figure 8 is a cross-section, perpendicular to the axis of rotation of the pump rotor, through an alternative embodiment of a cylinder block;
[fig.9]Figure 9 is an isometric view of a cylinder block according to an embodiment of the invention
[fig.10]Figure 10 is an isometric cross-section, isometric view and cross-section through a first embodiment of a high pressure valve cassette;
[fig.11]Figure 11 is an isometric cross-section, isometric view and cross-section through a second embodiment of a high pressure valve cassette; and
[fig.12]Figure 12 is an isometric cross-section, isometric view and cross-section through a third embodiment of a high pressure valve cassette; and
[fig.13]Figure 13 is a radial cross-section through the cylinder block showing forces acting on a cylinder block.

### Description of Embodiments

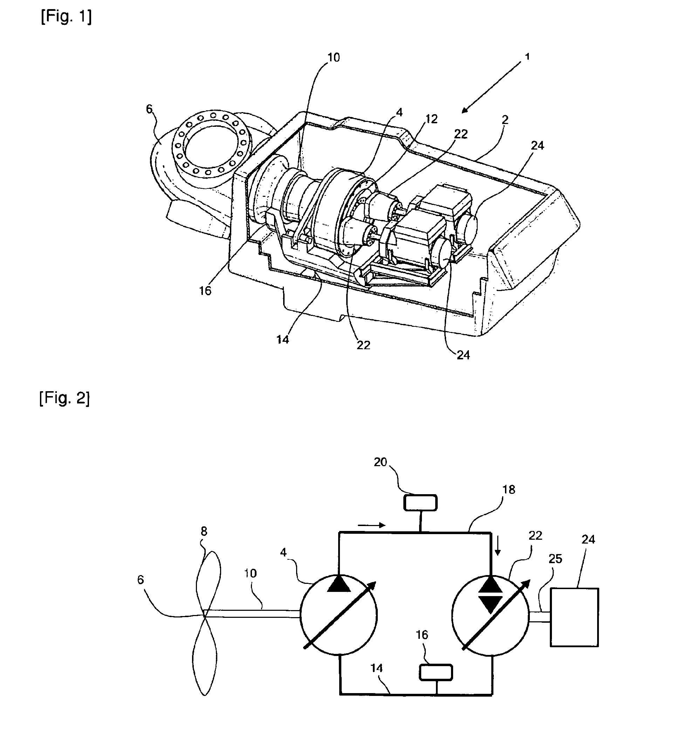

With reference to Figures 1 and 2, a wind turbine generator (being an example of a power generating apparatus of a renewable energy type which generates power from a renewable energy source, namely the wind) has a nacelle 1 having a body 2. Within the body, there is mounted a hydraulic radial piston pump 4 which is coupled to a rotor 6 having a plurality of turbine blades 8 mounted thereon and which rotates, driving the pump by way of a rotating shaft 10 coupled to a rotating part 12 of the pump.

During operation of the wind turbine generator, the pump pressurises hydraulic fluid received from low pressure manifold 14, which is in communication with low pressure fluid tank 16 and outputs pressurised fluid to a high pressure manifold 18, which is in communication with a high pressure accumulator 20. Hydraulic motors 22 (two of which are shown in Figure 1 and one of which is shown in Figure 2) are connected in parallel and receive hydraulic fluid from the high pressure manifold, using the pressurised fluid as an energy source to drive respective electricity generators 24 through drive shafts 25.

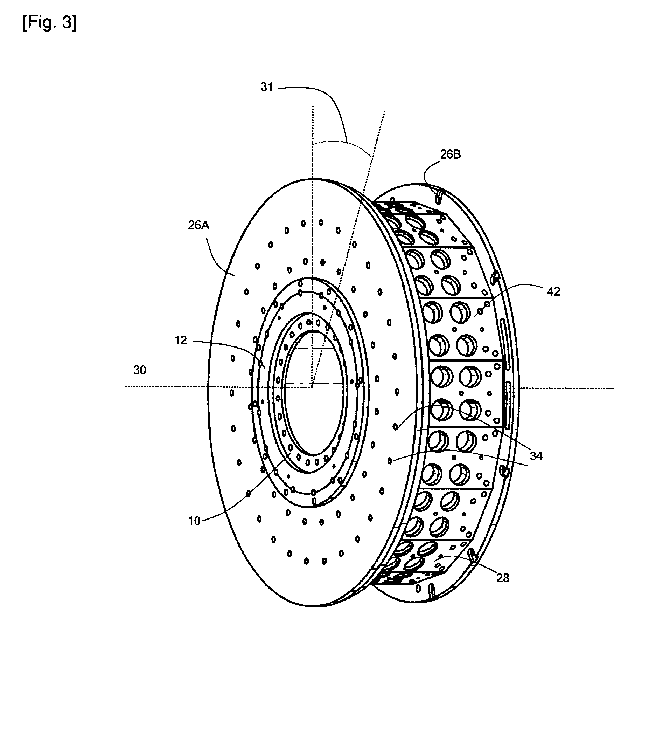

With reference to Figure 3, the hydraulic pump comprises an internal rotating part 12, coupled to the rotor through rotating shaft 10 and an outwards fixed part including front and rear end plates 26A, 26B with a plurality of cylinder blocks 28 extending between the front and rear end plates. The cylinder blocks define cylinders with pistons reciprocatingly mounted therein. The internal rotating part rotates around an axis 30 and includes a cam which drives the pistons to reciprocate within the cylinders. The outwards fixed part is mounted to a chassis 14 through torque arms 16 (functioning as the support) using a hydraulic torque support which absorbs torque received through the rotating shaft but allows some movement of the hydraulic pump perpendicular to the axis 30. Hydraulic torque supports are, for example, available from ESM Energie und Schwingungstechnik Mitsch GmbH of Rimbach-Mitlechtern, Germany. One skilled in the art will appreciate that in an alternative embodiment the inner part may be fixed and the outer part can rotate relative to the inner part.

The cylinder blocks 28 are circumferentially distributed around the axis 30 and each is retained between the front and rear end plates using both radial bolts which extend through radial bolt holes 32 and axial bolts which extend through axial bolt holes 34. The axial bolt holes may be provided entirely within single blocks, or may be provided between and spanning two adjacent blocks. Radial bolts are applied under sufficient tension to together provide a force in a radially inwards direction which exceeds the radially outwards force which will arise in use from the action of piston on cylinder in the cylinder blocks. The axial bolts are structurally important in that they tie the axially spaced structural elements together and resist forces arising from, for example, the weight of one the cylinders and end plates, preloaded force within the cylinder blocks and so forth, and thereby resist bending and torsion of the cylinder blocks. A significant role of the axial bolts may be to provide axial clamping of the end plates to the blocks during an assembly stage. The cylinder blocks can be individually demounted by detaching the radial and axial bolts and removing them in a radial direction. Cylinder blocks can be dismounted not only to inspect, repair or replace the cylinder blocks but also to access the cam.

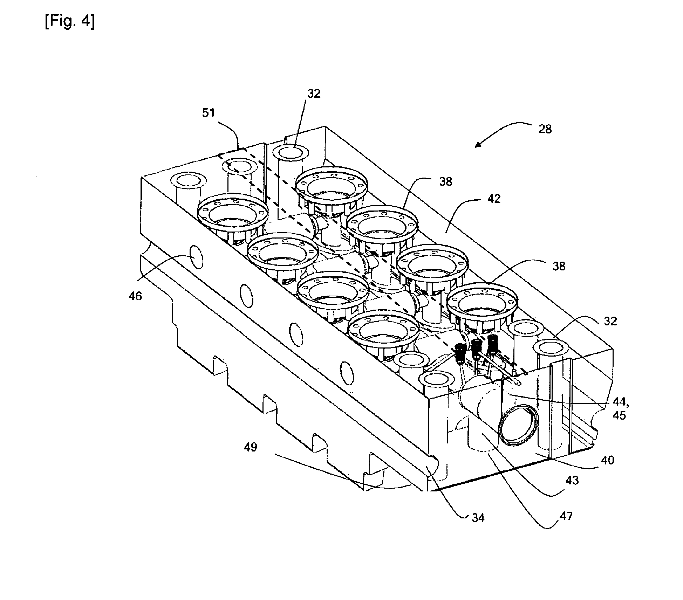

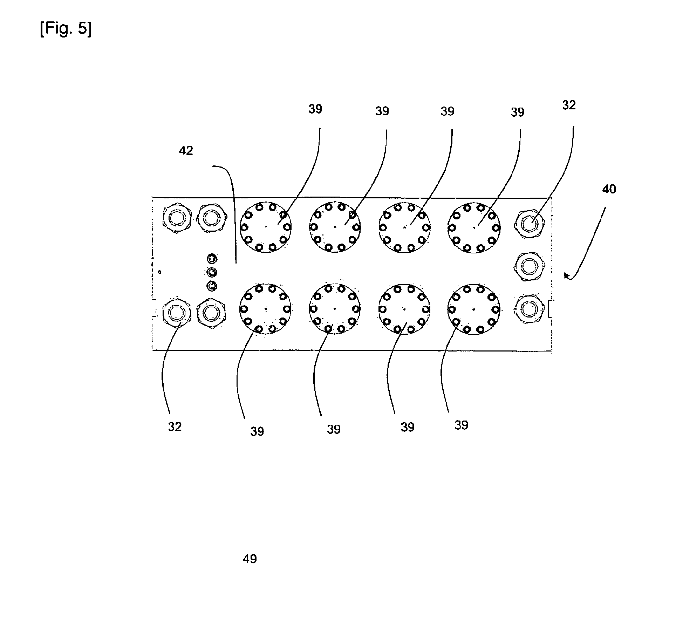

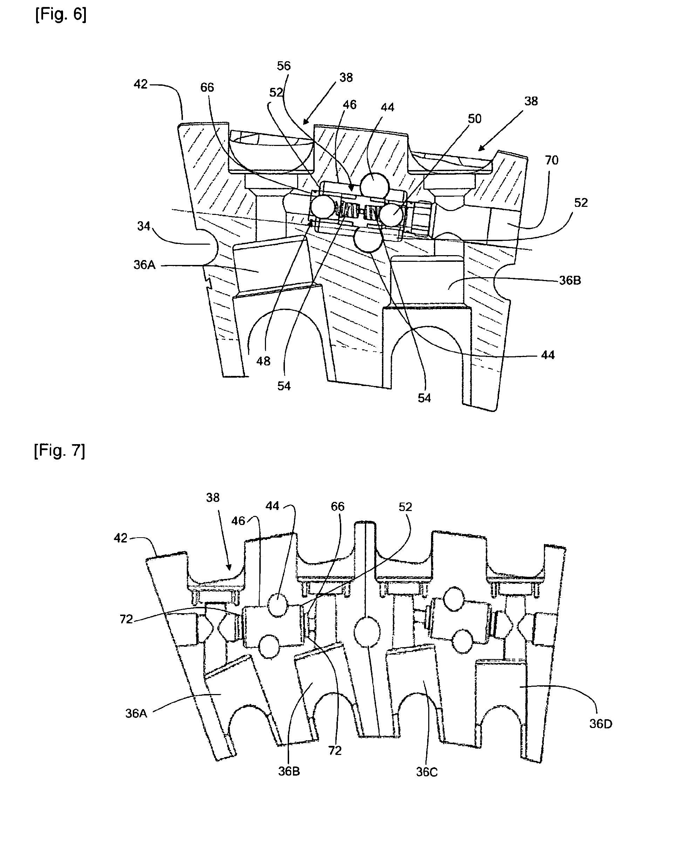

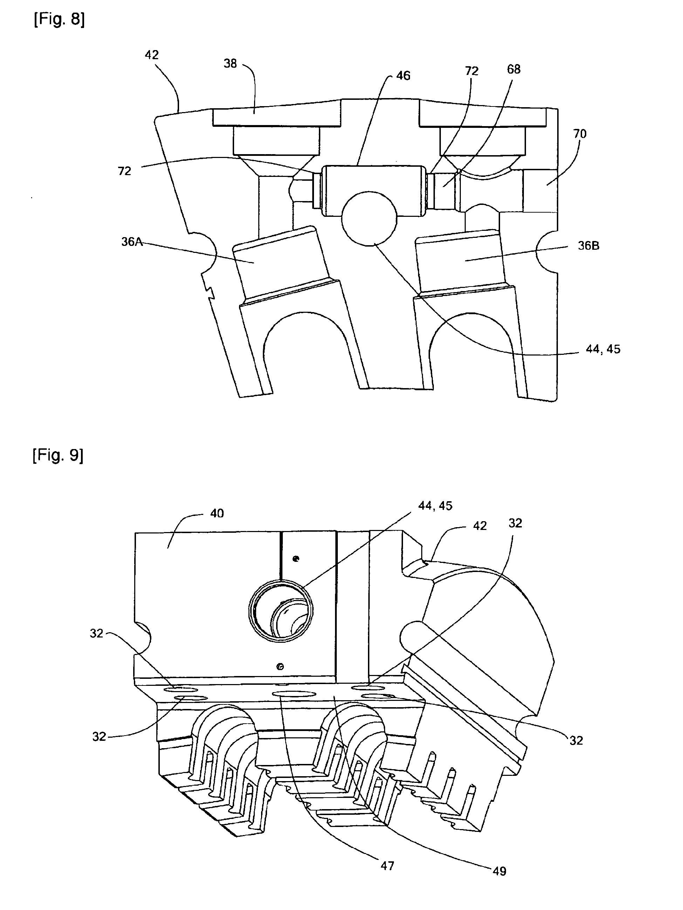

Figure 4 is an isometric view of a cylinder block, Figure 5 shows the same cylinder block in plan view from a radially outwards direction, Figures 6 is a transverse cross-sections through an alternative cylinder block and Figure 7 is a transverse cross-section through two circumferentially adjacent cylinder blocks. Figure 8 is a transverse cross-section through the cylinder block of Figure 4 and Figure 9 is an isometric view of the same cylinder block. The cylinder block of Figures 6 and 7 differ from the cylinder block of Figures 4, 8 and 9 in that there are two axially extending regions of high pressure passages between circumferentially adjacent cylinders rather than a shared axially extending region. A high pressure valve cassette is shown in the cylinder block of Figure 6 but not the cylinders blocks of Figures 7 and 8.

With reference to these Figures, the cylinders 36 have low pressure ports 38 which extend directly radially outwards from the cylinders and which function as cavities to receive low pressure valves (not shown). The low pressure manifold 14 is formed as a gallery around the radially outwards surfaces 42 of the cylinder blocks and this configuration enables the cylinders to communicate with the low pressure manifold through low pressure valves while maintaining strength of the cylinder blocks by minimising void volume.

In order to receive high pressure fluid from the cylinders and to supply it to the high pressure manifold, the cylinder block further comprises a plurality of high pressure fluid passages 44, 46 which extend between the high pressure manifold and the cylinders 36A, 36B through high pressure valves 48. The high pressure fluid passages include axially extending passageways 44 (functioning as the axially extending regions of the high pressure fluid passages), which extend axially towards the end faces 40. However, preferably the high pressure fluid passages do not open onto the end face but the drillways used to form the axially extending regions of the high pressure fluid passages are capped adjacent the end face and the axially extending regions of high pressure fluid passages have an axial end from which connecting regions of the high pressure fluid passages 43 extend radially to high pressure ports 47 on a radially inwards face 49 of the cylinder block, which form sealing connections with corresponding ports of the high pressure manifold. As they face radially inwards, the cylinder blocks can be removed radially outwards without sliding motions, avoiding damaging seals (not shown) at the high pressure ports. In the embodiment of Figures 6 and 7 there are axially extending regions of two high pressure fluid passages between the pair of circumferentially adjacent cylinders 36A, 36B and in the embodiment of Figures 4 and 8 there is a single larger diameter high pressure drillway 45 which functions as a single axially extending region of a high pressure passage between a pair of circumferentially adjacent cylinders. As described above, the high pressure drillway extends through the axial face and is capped at the axial face using a cap (not shown) so that high pressure fluid does not exit through the end face but instead does a 90 degree turn and exits the cylinder block radially through connecting region 43 of the high pressure fluid passage and high pressure port 47.

The axially extending regions of the high pressure fluid passages which provide fluid to both the first and second circumferentially spaced cylinders 36A, 36B are located at a circumferential angle between the circumferential angle of the first and second cylinders of an individual block. This configuration provides a stronger and more compact arrangement than would be obtained if, for each cylinder, an axially extending region of high pressure fluid pathway which supplied high pressure fluid to or from that cylinder was provided in the same direction around the axis relative to that cylinder. If an axially extending region of a high pressure fluid passage was provided in the same direction around the axis relative to each cylinder (one between each cylinder around the circumference), then there would be an axially extending region of a high pressure fluid passage between each pair of circumferentially adjacent cylinders. Instead, as can be seen from Figure 6, axially extending regions of high pressure fluid passages are provided only between alternate cylinders, around the circumference of the pump. This arrangement allows a more compact cylinder block to be provided. It can be seen from Figure 5 that if one of the axially extending regions of a high pressure fluid passage was provided at the left or right of the two cylinders which are illustrated, the cylinder block would have to be wider, leading to a less compact arrangement. Furthermore, the cylinder block would be weaker as a result of axial passageways between each circumferentially adjacent cylinder block than as a result of axial passageways only between alternate circumferentially adjacent cylinder blocks.

It can also be seen from Figure 4 that, other than apertures (bolt holes) for fixing purposes, the low pressure ports are the only apertures in the radially outwards face of the cylinder block. As the high pressure ports are located on the radially inwards surfaces 49, and do not also extend to the radially outwards face of the cylinder block, there are axially extending rows of radially outwards surface 51, between the low pressure ports, which are uninterrupted by ports, increasing mechanical strength.

The cylinders are provided in a grid forming axially spaced banks and each axial high pressure fluid passage will typically communicate with a row of axially spaced cylinders in different banks. The number of circumferentially adjacent cylinders in each cylinder block can be more than two. For example, two axially spaced banks of cylinders are shown in Figure 3 but cylinder blocks according to Figure 4 assemble to form a pump with four axially spaced banks of cylinders.

The high pressure valves are check valves with spherical silicon nitride valve members 50 biased towards respective circumferentially facing end stops 66 for receiving the HPV cassette 52 by springs 54. The check valves are provided back to back and open in opposite directions. Again, this arrangement of two check valves between circumferentially adjacent cylinders provides a compact and strong cylinder block. The high pressure valves are shown in Figure 6 but not Figure 7 or 8.

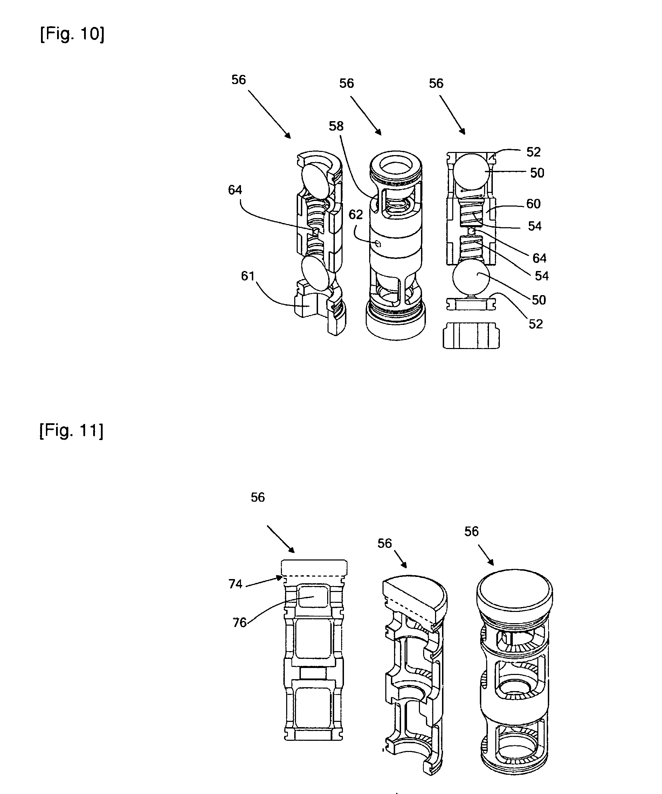

Conveniently, the two high pressure check valves can be manufactured in the form of a cassette 56 shown in Figure 10. In respect of the embodiment shown in figure 9, the cassette and the nut are separate parts. The cassette is first inserted, and then the nut is inserted and screwed to apply a preload force. The cassette includes both check valves, including valve members 50, valves seats 52 and springs 54. The cassette defines a cage 58 which in combination with the internal walls of the passage in which the cassette is fitted in use defines a chamber 60 for each valve and includes a breathing port 62 through which high pressure fluid from the high pressure fluid passages can exit or leave the cassette. It is important that the outer port(s) in the cage (cage portion outside the valve seat) align with the passageway communicating with the low pressure valve, and the passageway communicating with the cylinder. The cassette may have a key located on outer side to help with this alignment. There is also a channel 64 extending between the chambers. In an alternative configuration the breathing port extends into one chamber and high pressure fluid is received from the other chamber using the channel between the chambers.

The cassettes can be easily fitted during manufacture by insertion through a straight passage 46 which extends in a circumferential direction. The straight passage includes a cassette retaining region 68 which engages with the cassette (in embodiments without a cassette, this section is instead a high pressure valve retaining region which engages with the high pressure valve) and a cap securing region 70. A nut 61 is inserted after the cassette to secure and apply a preload force on the cassette, and a cap (of greater thread diameter than the nut) is introduced into cap securing region 70 to seal the circumferential drill way into which the cassette is inserted.

The diameter of the cap securing region 70 is large enough to allow insertion of the cassette (or high pressure valve in embodiments in which the high pressure valves are not formed into a cassette), without interference between the cap securing region and the high pressure valve cassette, or respective sealing members (O-rings) (not shown), and without the need to screw the cassette (or high pressure valve) through the threaded cap securing region 70.

The internal thread of the cap securing region has a larger inner diameter than the outer diameter of the high pressure valve cassette (or high pressure valve) and also has a larger internal diameter than cassette retaining region 68. The difference in diameter is sufficient (during insertion) for there to be no interaction between the cassette (or high pressure valve) thread and the thread of the cap securing region.

The cap securing region 70 may be threaded to allow securing of the corresponding thread on outer diameter of the cap. In an alternative embodiment, the cap securing region might not be threaded, and the cap instead being retained in the assembled position, by support from the adjacent block. The cassette (or high pressure valve) securing region may be threaded to allow securing of the corresponding thread on the outer diameter of the high pressure valve.

At each end of the cavity there is provided a sealing region 72, which may be of equal diameter at each end of the cavity. This is significant as, when one valve in the cassette is open (and the other closed), the hydraulic force acting on the nut and the other end of the cassette is imbalanced. The matching diameters are also significant in that there is no force imbalance when both valves in the cassette are open.

A larger diameter of the sealing region at the outermost end than the innermost end of the cassette would promote force imbalance. The imbalance of resultant force on the nut that occurs during pumping is ideally minimised. It is therefore in the preferable to keep the diameters of the two sealing regions as similar as possible, or the same. Where there is a difference in diameter, the greater the difference in diameter, the greater the imbalance of resultant force, and subsequently the peak force on the nut. The resultant force changes through the operating cycles of the two pistons, and imbalance occurs when one or the other cylinder is pressurised, but not both.

The preload force applied by the nut is set (at installation) such that it is greater than or equal to any opposing resultant force. Such opposing force will primarily be the resultant of hydraulic force imbalance.

In an embodiment where the sealing regions have the same diameter, the cassette can be fitted in either orientation and the cassette may be symmetric. Providing a symmetric cassette gives costs savings and means that the cassette cannot be fitted the wrong way round.

In the embodiment shown in Figures 6 and 7, two axial high pressure fluid drillways are provided between a pair of circumferentially adjacent cylinders, and both passages provide a path of high pressure fluid to leave each of the pair of cylinders. However, in alternative embodiments, where there are two axially extending regions of high pressure fluid passages between a pair of circumferentially adjacent cylinders, each might receive high pressure fluid from a respective one of the pair of cylinders.

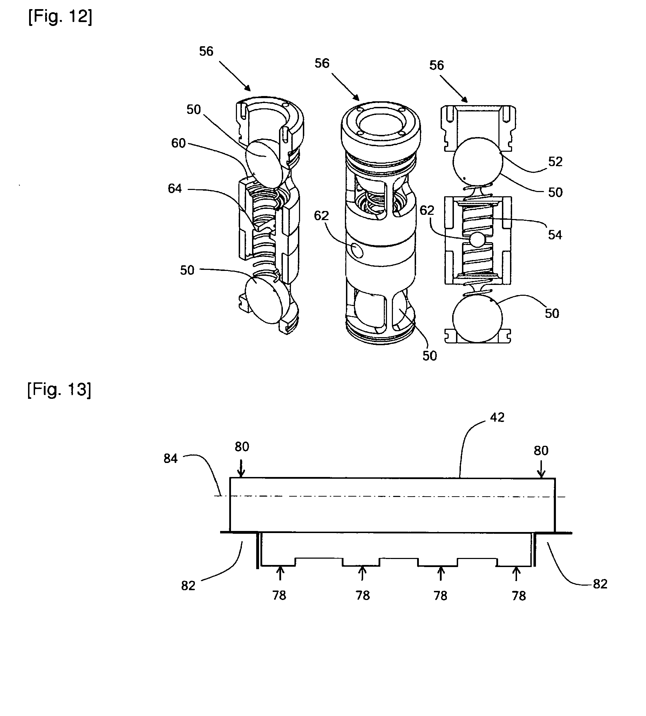

With reference to Figure 11 which shows a cross-section through a cylinder block in a plane which passes through the axis of rotation. In the embodiment shown in Figure 11, the cassette and the cap are integrated (joint) parts, however with a swivel 74 therebetween. First the integrated unit is inserted, and then the cap is screwed to apply preload force. With reference to Figure 12, the cylinder block is subject to radially outwards forces 78 from pistons in use and opposing radially inwards forces 80 from axial bolts. The cylinder block is supported on fixed shoulders 82 of the end plates 26A and 26B.

With reference to Figure 12, the cassette and the nut are integrated (joint) parts. The integrated unit is installed, and (instead of an internal hex as shown in Figure 9) a plurality of axial holes are provided, with which a torque applying tool can be engaged, in order to screw the nut, and to apply a preload force. As a result of the presence of the swivel, outer port 76 can aligned with the circumferential high pressure fluid passage before the nut is tightened

The cylinder blocks are designed so that they have a neutral axis 84 where there is no stress or strain. Before the cylinder blocks are manufactured they are designed using computer modelling programmes familiar to one skilled in the art. The radial distribution of cylinder block material affects the location of the neutral axis, with a greater amount of material at the radially outwards portion of the cylinder blocks causing the position of the neutral axis to move radially outwards. This provides a strong construction, resembling the I-beam (also known as H-beam) shape commonly employed in girders.

The radially outwardmost and radially inwardmost regions of the cylinder blocks have relatively little void volume (perhaps just the volume occupied by the radially outwards extending low pressure fluid passages), forming the flanges of the I-beam (or H-beam) shape and the void regions arising from the cylinders, high pressure fluid passages and the volume required for the high pressure valves are located at a radially intermediate location, where structural integrity is of less importance in an I-beam (or H-beam) construction. By locating the high pressure valves close to the neutral axis, their effect on the strength of the cylinder block and its ability to resist bending and torsional forces is reduced. In a preferred embodiment the high pressure valves are parallel to and intersect the neutral axis.

Typically, the cylinder blocks are formed as metal castings (which may be drilled if required). Thus, by minimising the void volume and thereby maximising the amount of metal present in a cylinder block of given external diameter, and by selecting the configuration of the high and low pressure fluid passages, the strength of the cylinder blocks has been maximised. This enables improved reliability and lifetime, or can enable the cylinder blocks to be smaller than would otherwise be required for a given cylinder size and power throughput, reducing the bulk and cost of the pump and increasing its efficiency.

Further variations and modifications may be made within the scope of the invention herein disclosed.

### Reference Signs List

- 1: Nacelle
- 2: Body of nacelle
- 4: Pump
- 6: Rotor
- 8: Turbine blades
- 10: Rotating shaft
- 12: Rotating part of pump
- 14: Low pressure manifold
- 16: Low pressure fluid tank
- 18: High pressure manifold
- 20: High pressure accumulator
- 22: Hydraulic motors
- 24: Electricity generators
- 25: Generator drive shafts
- 26A, 26B: Front and rear end plates
- 28: Cylinder blocks
- 30: Axis
- 31: Circumferential angle
- 32: Radial bolt holes
- 34: Axial bolt holes
- 36A, 36B: Cylinders
- 38: Low pressure ports / cavities for low pressure valves
- 39: Low pressure valves
- 40: End face (axial)
- 42: Radially outwards surface of cylinder blocks
- 43: Connecting regions of the high pressure fluid passages
- 44: Axially extending region of high pressure fluid passage
- 45: High pressure drillway (axial)
- 46: Circumferentially extending region of igh pressure fluid passage
- 47: High pressure ports
- 48: High pressure valve
- 49: Radially inwards surfaces
- 50: Valve member
- 51: Rows of uninterrupted radially outwards surface
- 52: Circumferentially facing end stop for receiving HPV cassette
- 54: Spring
- 56: Cassette
- 58: Cage
- 60: Chamber
- 61: Nut
- 62: Breathing port
- 64: Channel
- 66: End stop for high pressure valve
- 68: Cassette or high pressure valve securing region
- 70: Cap securing region
- 72: Sealing region
- 74: Swivel
- 76: Outer port in the cage
- 78: Radially outwards forces from pistons
- 80: Radially inwards forces from axial bolts
- 82: Shoulders of end plates
- 84: Neutral axis

## Claims

1. A power generating apparatus of a renewable energy type which generates power from a renewable energy source, the power generating apparatus comprising:
a nacelle (1); a hub on which at least one rotor blade (8) is mounted, the at least one rotor blade (8) receiving energy from the renewable energy source, causing it to rotate; a rotating shaft (10) which is coupled to the hub; a pump (4) which is coupled to the rotating shaft (10) and which is driven by rotation of the rotating shaft (10); at least one motor (22) which is driven by pressurized hydraulic fluid from the pump (4); a generator (24) which is coupled to the at least one motor (22);
the pump (4) comprising:
a static part which is coupled to the nacelle (1) by a support, and a rotating part (12), which is coupled to the rotating shaft (10) and rotatable around an axis (30);
one or more cylinder blocks (28) which together extend around the axis (30);
a low pressure fluid manifold (14) extending around the one or more cylinder blocks (28);
a high pressure fluid manifold (18);
wherein the one or more cylinder blocks (28) comprises a plurality of cylinders (36) which are circumferentially distributed around the axis (30), one or more high pressure fluid passages (44,46) through which the cylinders (36) communicate with the high pressure fluid manifold (18) through at least one high pressure valve (48) and a plurality of low pressure fluid passages (38) through which the cylinders (36) communicate with the low pressure manifold (14) through at least one low pressure valve (39);
wherein the said low pressure fluid passages (38) extend radially outwards from respective cylinders (36) to the radially outwards surface of the cylinder block (28), **characterised in that** the one or more high pressure fluid passages (44,46) through which a pair of circumferentially adjacent cylinders (36) communicate with the high pressure manifold (18) have an axially extending region (44) which extends axially towards an end surface of the cylinder block (28) at a circumferential angle which is between the circumferential angle of the pair of circumferentially adjacent cylinders (36).

2. A power generating apparatus of a renewable energy type according to claim 1, wherein for at least one of the pair of circumferentially adjacent cylinders (36), there is a further circumferentially adjacent cylinder (36), and there is no axially extending region of a high pressure fluid passage extending axially towards the end surface of the cylinder block (28) at a circumferential angle between the pair of cylinders (36) and the further cylinder (36).

3. A power generating apparatus of a renewable energy type according to claim 1, wherein the plurality of cylinders (36) are arranged in the form of a plurality of circumferentially spaced rows of cylinders (36), each row of cylinders (36) comprising a plurality of axially spaced cylinders (36), so that the pair of cylinders (36) are in a pair of rows of cylinders (36), wherein some or all of the cylinders (36) in each row communicate with the high pressure manifold (18) through a common axially extending region of a high pressure fluid passage (44), the common axially extending region high pressure fluid passage (44,46) extending axially towards the end face of the cylinder block (28) at a circumferential angle which is between the circumferential angle of the pair of cylinders (36).

4. A power generating apparatus of a renewable energy type according to claim 1, wherein the pair of circumferentially adjacent cylinders (36) communicate with the high pressure manifold (18) through a single said axially extending region of a high pressure fluid passage (44) which extends axially towards an end surface of the respective cylinder block (28) at a circumferential angle which is between the circumferential angle of the pair of circumferentially adjacent cylinders (36).

5. A power generating apparatus of a renewable energy type according to claim 1, wherein the pair of circumferentially adjacent cylinders (36) each communicate with an axially extending region (44) of different high pressure fluid passages (44,46) which axially extending regions extend axially towards an end surface of the respective cylinder block (28) at a circumferential angle which is between the circumferential angle of the pair of circumferentially adjacent cylinders (36).

6. A power generating apparatus of a renewable energy type according to claim 1, wherein the one or more cylinder blocks (28) have radially inwards surfaces and one or more high pressure fluid ports (47) on the radial inwards surfaces through which the cylinders communicate with the high pressure manifold (18) through the said axially extending regions of the high pressure fluid passages (44) and connecting regions of the high pressure fluid passages (46) which extend from axial ends of one or more said axially extending regions of the high pressure fluid passages (44) to one or more said high pressure fluid ports (47).

7. A power generating apparatus of a renewable energy type according to claim 6, wherein the connecting regions of the high pressure fluid passages (46) extend radially from the axially extending regions of the one or more high pressure fluid passages (44) to one or more said high pressure fluid ports (47) on the radially inwards surface of the respective cylinder block (28).

8. A power generating apparatus of a renewable energy type according to claim 1, wherein the axially extending regions of the high pressure fluid passages (44) extend to an axial end which is closer to the end plate (40) of the cylinder block (28) than the part of the pair of circumferentially adjacent cylinders (36) which is closest to the end plate (40) of the cylinder block (28).

9. A power generating apparatus of a renewable energy type according to claim 1, wherein the support (16) which couples the pump (4) to the nacelle (1) reacts torque applied to the pump (4) by the rotating shaft (10) while allowing some displacement of the pump (4) in a direction perpendicular to the axis (30) of the rotating shaft (10).

10. A power generating apparatus of a renewable energy type according to claim 1, wherein the pump (4) comprises a first end plate (26A) and a second end plate (26B), wherein the one or more cylinder blocks (28) extend between the first end plate (26A) and the second end plate (26B), and wherein the support (16) is coupled directly to the first end plate (26A) and not coupled directly to the second end plate (26B), wherein a plurality of axial bolts are provided to couple the first (26A) and second end plates (26B) through respective axial bores in the cylinder blocks (28).

11. A power generating apparatus of a renewable energy type according to claim 1, wherein the one or more cylinder blocks (28) have a neutral axis (84) at which the stress and strain due to bending are zero and wherein the axially extending regions of the high pressure fluid passages (44) and/or high pressure valve (48) are close to or intersect the neutral axis (84).

12. A power generating apparatus of a renewable energy type according to claim 11, wherein the high pressure valves (48) are parallel to and intersect the neutral axis (84).

13. A power generating apparatus of a renewable energy type according to claim 1, wherein the cylinder block (28) comprises at least one said high pressure valve (48), located radially outwards of the two circumferentially adjacent cylinders (36) and located at a circumferential angle between the circumferential angle of the low pressure passages (38) associated with each of the circumferentially adjacent cylinders (36).

14. A power generating apparatus of a renewable energy type according to claim 1, wherein the plurality of cylinders (36) comprises at least one bank of cylinders (36) which extends around the axis (30) and where the cylinders (36) in the at least one bank are operated with different phases during rotation of the rotating shaft (10).

15. A power generating apparatus of a renewable energy type according to claim 1, wherein the power generating apparatus of a renewable energy type is a wind turbine generator.

## Patentansprüche

1. Vorrichtung zur Energieerzeugung vom Typ für erneuerbare Energien, die Energie aus einer erneuerbaren Energiequelle erzeugt, wobei die Vorrichtung zur Energieerzeugung umfasst:
eine Gondel (1); eine Nabe, auf der mindestens ein Rotorblatt (8) befestigt ist, wobei das mindestens eine Rotorblatt (8) Energie von der erneuerbaren Energiequelle erhält, wodurch das Blatt dazu veranlasst wird, sich zu drehen; eine drehende Welle (10), die mit der Nabe verbunden ist; eine Pumpe (4), die mit der drehenden Welle (10) verbunden ist und die von der Drehung der drehenden Welle (10) angetrieben wird; mindestens einen Motor (22), der durch ein unter Druck stehendes Hydraulikfluid von der Pumpe (4) angetrieben wird; einen Generator (24), der mit dem mindestens einen Motor (22) verbunden ist;
wobei die Pumpe (4) umfasst:
einen statischen Teil, der mit der Gondel (1) durch einen Träger verbunden ist, und einen drehenden Teil (12), der mit der drehenden Welle (10) verbunden ist und um eine Achse (30) drehbar ist;
einen oder mehrere Zylinderblöcke (28), die sich zusammen um die Achse (30) erstrecken;
einen Niederdruckfluidverteiler (14), der sich um den einen oder die mehreren Zylinderblöcke (28) erstreckt;
einen Hochdruckfluidverteiler (18);
wobei die einen oder die mehreren Zylinderblöcke (28) mehrere Zylinder (36), die am Umfang um die Achse (30) verteilt sind, einen oder mehrere Durchlasswege (44, 46) für ein Hochdruckfluid, durch die die Zylinder (36) mit dem Hochdruckfluidverteiler (18) durch mindestens ein Hochdruckventil (48) kommunizieren, und mehrere Durchlasswege (38) für ein Niederdruckfluid, durch die die Zylinder (36) mit dem Niederdruckfluidverteiler (14) durch mindestens ein Niederdruckventil (39) kommunizieren, umfassen;
wobei sich die Durchlasswege (38) für ein Niederdruckfluid von den jeweiligen Zylindern (36) aus radial nach außen zu der radial nach außen gerichteten Oberfläche des Zylinderblocks (28) erstrecken, **dadurch gekennzeichnet, dass** die einen oder die mehreren Durchlasswege (44, 46) für ein Hochdruckfluid, durch welche ein Paar am Umfang benachbarter Zylinder (36) mit dem Hochdruckverteiler (18) kommunizieren, einen sich axial erstreckenden Bereich (44) aufweisen, der sich axial zu einer Endoberfläche des Zylinderblocks (28) an einem Umfangswinkel erstreckt, der zwischen dem Umfangswinkel des Paares der am Umfang benachbarten Zylinder (36) liegt.

2. Vorrichtung zur Energieerzeugung vom Typ für erneuerbare Energien nach Anspruch 1, wobei für mindestens eines von dem Paar am Umfang benachbarter Zylinder (36) es einen weiteren am Umfang benachbarten Zylinder (36) gibt, und wobei es keinen sich axial erstreckenden Bereich eines Durchlassweges für ein Hochdruckfluid gibt, der sich axial zu der Endoberfläche des Zylinderblocks (28) an einem Umfangswinkel zwischen dem Paar von Zylindern (36) und dem weiteren Zylinder (36) erstreckt.

3. Vorrichtung zur Energieerzeugung vom Typ für erneuerbare Energien nach Anspruch 1, wobei die mehreren Zylinder (36) in der Form von mehreren, am Umfang beabstandeten Reihen von Zylindern (36) angeordnet sind, wobei jede Reihe von Zylindern (36) mehrere von axial beabstandeten Zylindern (36) umfasst, so dass das Paar von Zylindern (36) sich in einem Paar von Reihen von Zylindern (36) befindet, wobei einige oder alle der Zylinder (36) in jeder Reihe mit dem Hochdruckverteiler (18) durch einen gemeinsamen, sich axial erstreckenden Bereich eines Durchlassweges (44) für ein Hochdruckfluid kommunizieren, wobei der gemeinsame sich axial erstreckende Bereich eines Durchlassweges (44, 46) für ein Hochdruckfluid sich axial zu einer Endoberfläche des Zylinderblocks (28) an einem Umfangswinkel erstreckt, der zwischen dem Umfangswinkel des Paares von Zylindern (36) liegt.

4. Vorrichtung zur Energieerzeugung vom Typ für erneuerbare Energien nach Anspruch 1, wobei das Paar am Umfang benachbarter Zylinder (36) mit dem Hochdruckverteiler (18) durch einen einzelnen sich axial erstreckenden Bereich eines Durchlassweges (44) für ein Hochdruckfluid kommuniziert, der sich axial zu einer Endoberfläche des jeweiligen Zylinderblocks (28) an einem Umfangswinkel erstreckt, der zwischen dem Umfangswinkel des Paares der am Umfang benachbarten Zylinder (36) liegt.

5. Vorrichtung zur Energieerzeugung vom Typ für erneuerbare Energien nach Anspruch 1, wobei das Paar am Umfang benachbarter Zylinder (36) jeweils mit einem sich axial erstreckenden Bereich (44) von unterschiedlichen Durchlasswegen (44, 46) für ein Hochdruckfluid kommuniziert, wobei die sich axial erstreckenden Bereiche sich axial zu einer Endoberfläche des jeweiligen Zylinderblocks (28) an einem Umfangswinkel erstrecken, der zwischen dem Umfangswinkel des Paares der am Umfang benachbarten Zylinder (36) liegt.

6. Vorrichtung zur Energieerzeugung vom Typ für erneuerbare Energien nach Anspruch 1, wobei die einen oder mehreren Zylinderblöcke (28) radial nach innen gerichtete Oberflächen und einen oder mehrere Anschlüsse (47) für ein Hochdruckfluid auf den radial nach innen gerichteten Oberflächen aufweisen, durch die die Zylinder mit dem Hochdruckverteiler (18) durch die sich axial erstreckenden Bereiche der Durchlasswege (44) für ein Hochdruckfluid kommunizieren, und wobei die Zylinderblöcke (28) verbindende Bereiche der Durchlasswege (46) für ein Hochdruckfluid aufweisen, die sich von den axialen Enden der einen oder mehreren sich axial erstreckenden Bereiche der Durchlasswege (44) für ein Hochdruckfluid zu einem oder zu mehreren Anschlüssen (47) für ein Hochdruckfluid erstrecken.

7. Vorrichtung zur Energieerzeugung vom Typ für erneuerbare Energien nach Anspruch 6, wobei die verbindenden Bereiche der Durchlasswege (46) für ein Hochdruckfluid sich radial von den sich axial erstreckenden Bereichen des einen oder der mehreren Durchlasswege (44) für ein Hochdruckfluid zu einem oder zu mehreren Anschlüssen (47) für ein Hochdruckfluid auf den radial nach innen gerichteten Oberflächen des jeweiligen Zylinderblocks (28) erstrecken.

8. Vorrichtung zur Energieerzeugung vom Typ für erneuerbare Energien nach Anspruch 1, wobei die sich axial erstreckenden Bereiche der Durchlasswege (44) für ein Hochdruckfluid sich zu einem axialen Ende erstrecken, das näher an der Endplatte (40) des Zylinderblocks (28) liegt als der Teil des Paares am Umfang benachbarter Zylinder (36), der am nächsten an der Endplatte (40) des Zylinderblocks (28) liegt.

9. Vorrichtung zur Energieerzeugung vom Typ für erneuerbare Energien nach Anspruch 1, wobei der Träger (16), der die Pumpe (4) mit der Gondel (1) verbindet, auf ein Drehmoment reagiert, das auf die Pumpe (4) durch die drehende Welle (10) ausgeübt wird, während eine gewisse Verschiebung der Pumpe (4) in einer Richtung, die senkrecht zu der Achse (30) der drehenden Welle (10) ist, erlaubt wird.

10. Vorrichtung zur Energieerzeugung vom Typ für erneuerbare Energien nach Anspruch 1, wobei die Pumpe (4) eine erste Endplatte (26A) und eine zweite Endplatte (26B) umfasst, wobei der eine oder die mehreren Zylinderblöcke (28) sich zwischen der ersten Endplatte (26A) und der zweiten Endplatte (26B) erstrecken, und wobei der Träger (16) mit der ersten Endplatte (26A) direkt verbunden ist und mit der zweiten Endplatte (26B) nicht direkt verbunden ist, wobei mehrere Axialbolzen bereitgestellt sind, um die erste (26A) und die zweite Endplatte (26B) durch jeweilige Axialbohrungen in den Zylinderblöcken (28) zu verbinden.

11. Vorrichtung zur Energieerzeugung vom Typ für erneuerbare Energien nach Anspruch 1, wobei der eine oder die mehreren Zylinderblöcke (28) eine neutrale Achse (84) aufweisen, an der die Spannung und Verformung auf Grund des Biegens Null sind, und wobei die sich axial erstreckenden Bereiche der Durchlasswege (44) für ein Hochdruckfluid und/oder eines Hochdruckventils (48) nahe bei der neutralen Achse (84) liegen oder diese schneiden.

12. Vorrichtung zur Energieerzeugung vom Typ für erneuerbare Energien nach Anspruch 11, wobei die Hochdruckventile (48) parallel zu der neutralen Achse (84) liegen und diese schneiden.

13. Vorrichtung zur Energieerzeugung vom Typ für erneuerbare Energien nach Anspruch 1, wobei der Zylinderblock (28) mindestens eines von dem Hochdruckventil (48) umfasst, das radial nach außen von den zwei am Umfang benachbarten Zylindern (36) angeordnet ist und an einem Umfangswinkel zwischen dem Umfangswinkel der Durchlasswege (38) für den Niederdruck, die mit jedem der am Umfang benachbarten Zylinder (36) verbunden sind, angeordnet ist.

14. Vorrichtung zur Energieerzeugung vom Typ für erneuerbare Energien nach Anspruch 1, wobei die Mehrzahl der Zylinder (36) mindestens eine Reihe von Zylindern (36) umfasst, die sich um die Achse (30) erstrecken und wobei die Zylinder (36) in der mindestens einen Reihe mit verschiedenen Phasen während des Drehens der drehenden Welle (10) betrieben werden.

15. Vorrichtung zur Energieerzeugung vom Typ für erneuerbare Energien nach Anspruch 1, wobei die Vorrichtung zur Energieerzeugung vom Typ für erneuerbare Energien ein Windturbinengenerator ist.

## Revendications

1. Appareil de génération d'énergie d'un type à énergie renouvelable qui génère de l'énergie à partir d'une source d'énergie renouvelable, l'appareil de génération d'énergie comprenant:
une nacelle (1); un moyeu sur lequel au moins une pale de rotor (8) est montée, ladite au moins une pale de rotor (8) recevant de l'énergie de la source d'énergie renouvelable, amenant celle-ci à tourner; un arbre rotatif (10) qui est couplé au moyeu; une pompe (4) qui est couplée à l'arbre rotatif (10) et qui est entraînée par la rotation de l'arbre rotatif (10); et au moins un moteur (22) qui est entraîné par un fluide hydraulique sous pression provenant de la pompe (4); un générateur (24) qui est couplé audit au moins un moteur (22);
la pompe (4) comprenant:
- une partie statique qui est couplée à la nacelle (1) par un support, et une partie tournante (12), qui est couplée à l'arbre rotatif (10) et qui peut tourner autour d'un axe (30);
- un ou plusieurs blocs-cylindres (28), qui s'étendent ensemble autour de l'axe (30);
- un collecteur de fluide basse pression (14) s'étendant autour du ou des blocs-cylindres (28);
- un collecteur de fluide haute pression (18);
dans lequel le ou les blocs-cylindres (28) comprend/- comprennent une pluralité de cylindres (36) qui sont distribués de façon circonférentielle autour de l'axe (30), un ou plusieurs passages de fluide haute pression (44, 46) à travers lesquels les cylindres (36) communiquent avec le collecteur de fluide haute pression (18) à travers au moins une soupape haute pression (48) et une pluralité de passages de fluide basse pression (38) à travers lesquels les cylindres (36) communiquent avec le collecteur de fluide basse pression (14) à travers au moins une soupape basse pression (39);
dans lequel lesdits passages de fluide basse pression (38) s'étendent radialement vers l'intérieur à partir de cylindres respectifs (36) jusqu'à la surface radialement extérieure du bloc-cylindres (28),
**caractérisé en ce que** le ou les passages de fluide haute pression (44, 46) à travers lesquels une paire de cylindres adjacents en direction circonférentielle (36) communiquent avec le collecteur de fluide haute pression (18) a/ont une région d'extension axiale (44) qui s'étend axialement vers une surface d'extrémité du bloc-cylindres (28) avec un angle circonférentiel qui est compris entre l'angle circonférentiel de la paire de cylindres adjacents en direction circonférentielle (36).

2. Appareil de génération d'énergie d'un type à énergie renouvelable selon la revendication 1, dans lequel il y a un cylindre supplémentaire adjacent en direction circonférentielle (36) pour au moins une paire de cylindres adjacents en direction circonférentielle (36), et il n'y a pas de région d'extension axiale d'un passage de fluide haute pression s'étendant axialement en direction de la surface d'extrémité du bloc-cylindres (28) avec un angle circonférentiel compris entre la paire de cylindres (36) et le cylindre supplémentaire (36).

3. Appareil de génération d'énergie d'un type à énergie renouvelable selon la revendication 1, dans lequel la pluralité de cylindres (36) sont agencés sous la forme d'une pluralité de rangées de cylindres (36) espacées en direction circonférentielle, chaque rangée de cylindres (36) comprenant une pluralité de cylindres espacés axialement (36), de telle manière que la paire de cylindres (36) se trouve dans une paire de rangées de cylindres (36), dans lequel certains ou tous les cylindres (36) dans chaque rangée communiquent avec le collecteur haute pression (18) à travers une région d'extension axiale commune d'un passage de fluide haute pression (44), la région d'extension axiale commune du passage haute pression (44, 46) s'étendant axialement en direction de la face d'extrémité du bloc-cylindres (28) avec un angle circonférentiel qui est compris entre l'angle circonférentiel de la paire de cylindres (36).

4. Appareil de génération d'énergie d'un type à énergie renouvelable selon la revendication 1, dans lequel la paire de cylindres adjacents en direction circonférentielle (36) communiquent avec le collecteur haute pression (18) à travers une seule région d'extension axiale d'un passage de fluide haute pression (44) qui s'étend axialement en direction d'une surface d'extrémité du bloc-cylindres respectif (28) avec un angle circonférentiel qui est compris entre l'angle circonférentiel de la paire de cylindres adjacents en direction circonférentielle (36).

5. Appareil de génération d'énergie d'un type à énergie renouvelable selon la revendication 1, dans lequel la paire de cylindres adjacents en direction circonférentielle (36) communiquent chacun avec une région d'extension axiale (44) de différents passages de fluide haute pression (44, 46), lesdites régions d'extension axiale s'étendant axialement en direction d'une surface d'extrémité du bloc-cylindres respectif (28) avec un angle circonférentiel qui est compris entre l'angle circonférentiel de la paire de cylindres adjacents en direction circonférentielle (36).

6. Appareil de génération d'énergie d'un type à énergie renouvelable selon la revendication 1, dans lequel le ou les blocs-cylindres (28) présentent des surfaces radialement intérieures et un ou plusieurs orifices de fluide haute pression (47) sur les surfaces radialement intérieures, à travers lesquels les cylindres communiquent avec le collecteur haute pression (18) à travers lesdites régions d'extension axiale des passages de fluide haute pression (44) et des régions de connexion des passages de fluide haute pression (46) qui s'étendent à partir d'extrémités axiales d'une ou de plusieurs desdites régions d'extension axiale des passages de fluide haute pression (44) vers un ou plusieurs desdits orifices de fluide haute pression (47).

7. Appareil de génération d'énergie d'un type à énergie renouvelable selon la revendication 6, dans lequel les régions de connexion des passages de fluide haute pression (46) s'étendent radialement à partir des régions d'extension axiale du ou des passages de fluide haute pression (44) vers un ou plusieurs desdits orifices de fluide haute pression (47) sur la surface radialement intérieure du bloc-cylindres respectif (28).

8. Appareil de génération d'énergie d'un type à énergie renouvelable selon la revendication 1, dans lequel les régions d'extension axiale des passages de fluide haute pression (44) s'étendent jusqu'à une extrémité axiale qui est plus proche de la plaque d'extrémité (40) du bloc-cylindres (28) que la partie de la paire de cylindres adjacents en direction circonférentielle (36) qui est la plus proche de la plaque d'extrémité (40) du bloc-cylindres (28).

9. Appareil de génération d'énergie d'un type à énergie renouvelable selon la revendication 1, dans lequel le support (16) qui couple la pompe (4) à la nacelle (1) réagit au couple appliqué à la pompe (4) par l'arbre rotatif (10) tout en permettant un certain déplacement de la pompe (4) dans une direction perpendiculaire à l'axe (30) de l'arbre rotatif (10).

10. Appareil de génération d'énergie d'un type à énergie renouvelable selon la revendication 1, dans lequel la pompe (4) comprend une première plaque d'extrémité (26A) et une deuxième plaque d'extrémité (26B), dans lequel le ou les blocs-cylindres (28) s'étendent entre la première plaque d'extrémité (26A) et la deuxième plaque d'extrémité (26B), et dans lequel le support (16) est couplé directement à la première plaque d'extrémité (26A) et n'est pas couplé directement à la deuxième plaque d'extrémité (26B), dans lequel une pluralité de boulons axiaux sont prévus afin de coupler la première (26A) et la deuxième (26B) plaques d'extrémité à travers des alésages axiaux respectifs dans les blocs-cylindres (28).

11. Appareil de génération d'énergie d'un type à énergie renouvelable selon la revendication 1, dans lequel le ou les blocs-cylindres (28) présentent un axe neutre (84) sur lequel la contrainte et la déformation dues à la flexion sont nulles et dans lequel les régions d'extension axiale des passages de fluide haute pression (44) et/ou la soupape haute pression (48) sont proches de ou coupent l'axe neutre (84).

12. Appareil de génération d'énergie d'un type à énergie renouvelable selon la revendication 11, dans lequel les soupapes haute pression (48) sont parallèles à et coupent l'axe neutre (84).

13. Appareil de génération d'énergie d'un type à énergie renouvelable selon la revendication 1, dans lequel le bloc-cylindres (28) comprend au moins une de ces soupapes haute pression (48), située radialement à l'extérieur des deux cylindres adjacents en direction circonférentielle (36) et située avec un angle circonférentiel compris entre l'angle circonférentiel des passages basse pression (38) associés à chacun des cylindres adjacents en direction circonférentielle (36).

14. Appareil de génération d'énergie d'un type à énergie renouvelable selon la revendication 1, dans lequel la pluralité de cylindres (36) comprend au moins un banc de cylindres (36) qui s'étend autour de l'axe (30) et dans lequel les cylindres (36) dans ledit au moins un banc fonctionnent avec différentes phases pendant la rotation de l'arbre rotatif (10).

15. Appareil de génération d'énergie d'un type à énergie renouvelable selon la revendication 1, dans lequel l'appareil de génération d'énergie d'un type à énergie renouvelable est un générateur à éolienne.
